# EUROPEAN PATENT APPLICATION

(11) **EP 1 134 875 A1**
(43) Date of publication of application: **19.09.2001**
(21) Application number: 00118549.5
(22) Date of filing: 26.08.2000
(51) Int. Cl.: H02K 5/16, H02K 7/08

(54) **A spindle motor for disk driving device with fluid bearing**

(30) Priority: 15.03.2000 JP 2000072127
(71) Applicant: MINEBEA CO., LTD., Kitasaku-gun, Nagano-ken (JP)
(72) Inventor: Kato, Kyoji, Minebea Co., Ltd., Kitasaku-gun, Nagano-ken (JP)
(74) Representative: Patentanwälte Schaad, Balass, Menzl & Partner AG

(57) **Abstract**

A magnet 5 is disposed radially outward to a fitting portion 8. Thereby, an armature 3 to be disposed so as to face the magnet 5 may be arranged radially outward. It is possible to keep a large space for the arrangement of a fluid bearing to be disposed radially inward to the armature, and, as a result, the fluid bearing having a large size may be used. The large sized fluid bearing 40 is used for keeping a high mechanical strength, avoiding a fear that the fluid bearing 40 would be damaged when it receives a shock, and also avoiding the reduction in rotational speed of the magnetic disk 7, the degradation of accuracy in the writing and reading operation of magnetic data and the generation of a noise or a vibration. The fluid bearing 40 is used to reduce a friction even if the motor is rotated at a high speed, which may reduce the power consumption.

## Description

### BACKGROUND OF THE INVENTION

### 1. Field of the Invention

The present invention relates to a motor for driving a magnetic disk such as a spindle motor used in a hard disk drive of a computer.

### 2. Description of the Related Art

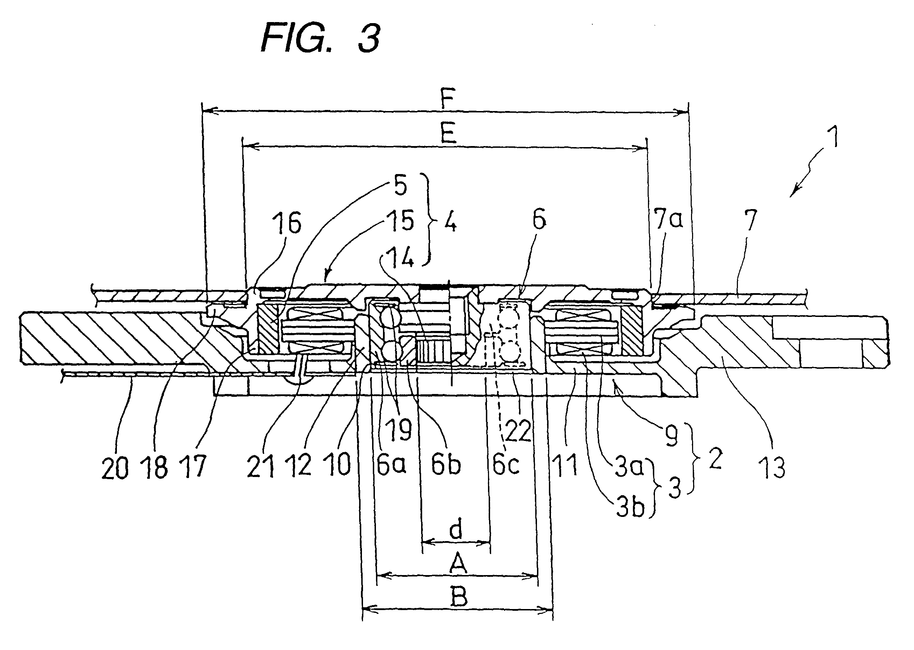

Fig. 3 shows an example of a motor used in a hard disk drive. A magnet 5 in this motor 1 (magnetic disk drive motor) is provided with a rotor 4 so as to face an armature 3 provided on a stator 2. A ball bearing 6 for rotatably supporting the rotor 4 to the stator 2 is provided radially inward in positional relation with the magnet 5 and armature 3. And, a fitting portion 8 fitted in a hole (disk fitting hole 7a) of a magnetic disk 7 for supporting the magnetic disk 7 is provided in the rotor 4.

The stator 2 mainly consists of a substantially disc-shaped base 9 and the armature 3 held by the base 9. The base 9 mainly consists of a substantially disk-shaped base body 11 having a hole (base hole) 10 in its central portion, a cylindrical member (base cylinder body 12) provided upright from an inner circumferential portion of the base hole 10 and a flange (base flange 13) extending in the same direction as the base cylinder body 12 from the circumferential portion of the base body 11 with its edge portion extending radially outward from the base body 11. An inner diameter of the base cylinder body 12 is set at dimension A, and an outer diameter thereof is set at dimension B.

The armature 3 comprises a stator stack 3a held by the base cylinder body 12 and a coil 3b wound around this stator stack 3a, and is disposed in a space between the base cylinder body 12 and the base flange 13.

The rotor 4 mainly consists of a shaft (rotor shaft 14) having a diameter d, a main body of substantially disk-shaped rotor (hereinafter referred to as a hub 15) fitted to and held by the rotor shaft 14 and the magnet 5 held by the hub 15. The hub 15 mainly comprises a substantially disk-shaped hub body portion 16 (fitting portion) having dimension E and inserted into the disk fitting hole 7a of the magnetic disk 7 for holding the disk 7, a flange (hub flange 17) provided upright at the outer circumferential portion of the hub body portion 16 and an outer diameter F of an annular extension 18 extending to project outward from the outer circumferential portion of the hub flange 17. The outer circumferential portion of the hub body portion 16 corresponds to the fitting portion 8. The magnet 5 is held inside the hub flange 17. When the rotor 4 is assembled in the stator 2, the magnet 5 faces the armature 3, and the magnet 5 and the armature 3 are disposed inside of the hub flange 17 and the hub 15.

A sleeve-like outer race 6a of the ball bearing 6 is held in the base cylinder body 12 of the stator 2, and a first sleeve-like inner race 6b is held by the rotor shaft 14. A proximal end side (on the side of the rotor 4) of the rotor shaft 14 projects radially outward and also serves as a second inner race 6c of the ball bearing 6. The inner race of the ball bearing 6 comprises a first inner race 6b and a second inner race 6c. A pair of seal plates 19 is provided at upper and lower ends of the outer race 6a. Reference numeral 20 in Fig. 3 denotes a printed circuit board, and the printed circuit board 20 and the coil 3b are connected to each other through a lead wire 21. Reference numeral 22 in Fig. 3 denotes a cap for covering the base hole 10 of the base body 11.

Then, this motor 1 rotates the magnetic disk 7 so that the read and write of data of the magnetic disk 7 may be performed with a magnetic head (not shown).

And now, the motor 1 (magnetic disk drive motor) is desirable to be light in weight, thin in thickness and hence small in size.

On the other hand, when the motor 1 receives a mechanical shock from outside, the shock is concentrated on the rotor 4, more specifically, onto the ball bearing 6 supporting the rotor 4, so that the ball bearing 6 is threatened to be damaged. And, in case the ball bearing 6 is damaged, the rotational speed of the magnetic disk 7 is decreased, that is, the reading and writing operation is threatened for an inaccurate performance or generation of a noise and vibration.

For preventing the ball bearing 6 from being damaged, it may be sufficient that a bearing of, for example, a large size and high mechanical strength is used. However, since the diameter of the disk fitting hole 7a of the magnetic disk 7 is standardized by a predetermined length and the outer diameter of the hub 15 (hub body portion 16) is determined by the diameter of the disk fitting hole 7a, the diameter of the magnet 5 or the stator 2 provided inside the hub 15 is also limited. For this reason, the size of the bearing to be requested as large is limited.

For reference, in order to apply the large sized bearing, there is an approach to decrease the dimension in the radial direction of the armature 3 or the magnet 5 for offsetting the dimension of the diameter of the bearing to be increased. However, in this case, obtaining a desired rotational torque or a rotational velocity is threatened.

Therefore, in the prior art mentioned above, it has been difficult to adopt the approach of the large sized bearing to solve problems (causing an inaccuracy of reading and writing magnetic data or generating a noise or vibration) caused by the shock from the outside.

Also, the motor for the magnetic disk drive has been recently developed for use in a high-speed condition, and it is also desired to perform a low frictional operation to save the energy consumption even in the high-speed rotation mode of the motor.

### SUMMARY OF THE INVENTION

The present invention has been made in the light of the above problems, an object of the present invention is to provide a motor that may attain an enhanced shock resistance without reducing a rotational torque and speed and also may reduce power consumption while performing a low frictional operation.

According to a first aspect of the present invention, a motor in which a magnet is provided on a rotor for facing an armature provided on a stator, a bearing for supporting a rotation of the rotor relative to the stator is provided radially inward for the arrangement of the magnet and the armature, and a fitting portion to be inserted into a hole of a magnetic disk for supporting the magnetic disk is provided on the rotor, is characterized by that the bearing is of a fluid type of bearing and the magnet is provided radially outward comparing to the fitting portion.

According to a second aspect of the present invention, in the first aspect, an outer race of the bearing is formed in connection with the rotor.

According to a third aspect of the present invention, in the first aspect, an inner race of the bearing is formed in connection with the rotor.

### BRIEF DESCRIPTION OF THE DRAWINGS

In the accompanying drawings:
Fig. 1 is a cross-sectional view showing a motor in accordance with a first embodiment of the present invention;
Fig. 2 is a cross-sectional view showing a motor in accordance with a second embodiment of the present invention; and
Fig. 3 is a cross-sectional view showing an example of a conventional motor.

### DETAILED DESCRIPTION OF THE PREFERRED EMBODIMENTS

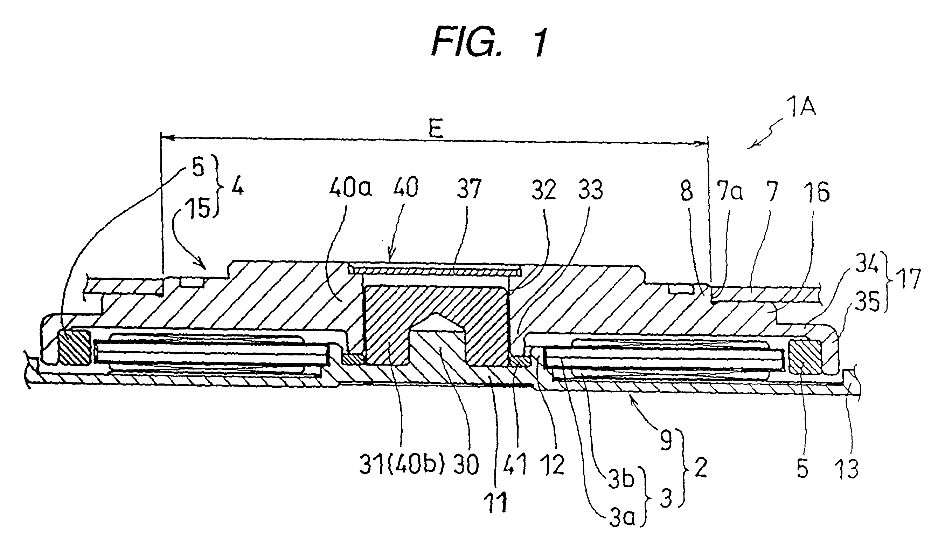

Amotor according to a first embodiment of the present invention will be described with reference to Fig. 1.

In this motor 1A, a magnet 5 is provided so as to face to an armature 3 provided on a stator 2. A fluid bearing 40 using oil for rotationally supporting the rotor 4 to the stator 2 is provided radially inward at the disposing portion of the magnet 5 and armature 3. And, a fitting portion 8 to be inserted into a fitting hole 7a of a magnetic disk 7, by which the magnetic disk 7 is supported, is provided on the rotor 4.

The stator 2 mainly consists of a substantially disk-like base 9 and an armature 3 supported on the base 9 at a predetermined gap kept between the armature 3 and the magnet 5. The base 9 mainly consists of a substantially disk-like base body 11 with a boss portion 30 projecting from the central portion thereof, a cylindrical portion (base cylinder body 12) provided upright at a predetermined distance from the boss portion 30 of the base body 11, a flange (base flange 13) projecting in the same direction as that of the base cylinder body 12 from a circumferential edge portion of the base body 11, and a stator side shaft member 31 fitted around and supported on the boss portion 30. The armature 3 is held on the outer circumferential side of the base cylinder body 12.

The rotor 4 comprises a substantially disk-like rotor body (hub 15) with a hole (rotor hole 32) in the central portion thereof and a magnet 5 held on this hub 15. The hub 15 comprises a substantially disk-like hub body portion 16, a cylindrical portion (rotor cylinder portion 33) provided vertically at the inner circumferential edge portion of the rotor hole 32 and inserted into the inner space of the base cylinder body 12, a fitting portion 8 formed to be projected from the surface opposite to the rotor sleeve portion 33 in the hub body portion 16 and inserted into the disk fitting hole 7a of the magnetic disk 7 for holding the magnetic disk 7 with a diameter dimension E, and a flange (hub flange 17) formed on the outer circumferential portion of the hub body portion 16. The diameter dimension of the hub body portion 16 is set to be greater than the diameter dimension of the fitting portion 8.

The hub flange 17 mainly consists of a hub flange extension portion 34 extending radially outward from the outer circumferential portion of the hub body portion 16 by a predetermined length and a substantially annular hub flange vertical wall portion 35 suspending from the peripheral edge portion of the hub flange extension portion 34. A gap having a predetermined width is formed between the armature 3 and the inner circumferential side of the hub flange vertical wall portion 35 to hold the magnet 5. In this case, the diameter dimension of the hub body portion 16 is greater than that of the fitting portion 8, and the hub flange extension portion 34 is provided on the hub body portion 16. The magnet 5 is disposed radially outward to the fitting portion 8. An annular thrust plate 41 is provided between the rotor cylinder portion 33 and the stator 2 as well as between the base cylinder body 12 and the stator shaft member 31.

Reference numeral 37 in Fig. 1 designates a cap for covering the rotor hole 32 of the hub 15.

The fluid bearing 40 is mainly consisted so that the rotor hole 32 formed on the hub 15 is used for the outer race 40a, the stator shaft member 31 as inner race 40b, and that the fill oil liquid (fluid) is filled into the space created by the rotor hole 32 portion, stator shaft member 31, the thrust plate 41 and the cup 37.

In the first embodiment structured as described above, the magnet 5 is disposed radially outward to the fitting portion 8 so that the armature 3 to be arranged to face to the magnet 5 may be disposed more radially outward. As a result, a larger space may be kept for the arrangement of the fluid bearing 40 to be provided radially inward to the armature 3. Accordingly, a large sized fluid bearing 40 may be used.

Thus, the large sized fluid bearing 40 is used so that the fluid bearing 40 may ensure a higher mechanical strength. Even if the motor 1A receives a mechanical shock from the outside, and the shock is concentrated on the fluid bearing 40, it is possible to prevent the fluid bearing 40 from being damaged. For this reason, the fear of the reduction in the rotational speed of the magnetic disk 7, the decrease of accuracy for reading and writing magnetic data and the generation of noise or vibration all caused by the damage of the bearing can be avoided.

Also, when the fluid bearing 40 is used, even if the motor is rotated at a high rotational speed, there is a small friction, which may reduce the power consumption. Furthermore, the generation of vibrations has lessened compared with the roller bearing, the accuracy of the writing and reading operation of the magnetic data is enhanced, the generation of noises can be more confidently suppressed, and hence the life of the fluid bearing 40, that is, the life of the motor 1A can be elongated.

Also, since the dimensions in the radial direction of the magnet 5 and armature 3 are not reduced in comparison with the conventional art, it is possible to obtain a desired rotational torque and rotational speed in the same manner as in the conventional art.

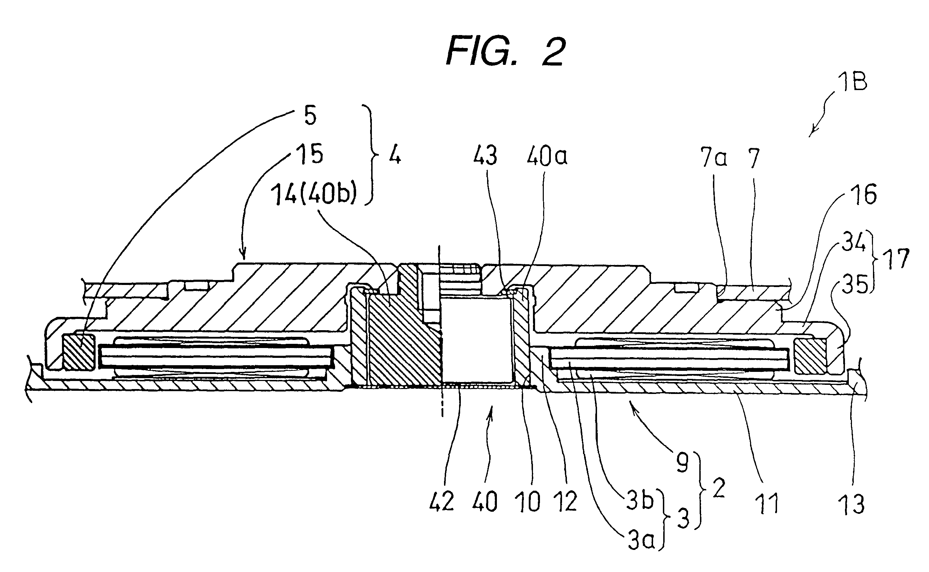

A second embodiment of the present invention will be described with reference to Fig. 2. In the motor 1A (Fig. 1) in accordance with the first embodiment, the outer race of the fluid bearing 40 is formed in connection with the rotor 4 so that the outer race of the fluid bearing 40 is adapted to be rotated. But, in a motor 1B shown in Fig. 2, the inner race of the fluid bearing 40 is formed in connection with the rotor 4 so that the rotor shaft 14 (inner race side) of the rotor 4 is adapted to be rotated. Incidentally, as described later, the arrangement where the magnet 5 is provided radially outward on the fitting portion 8 is in the same manner as in the first embodiment.

The stator 2 of the motor 1B in accordance with the second embodiment as shown in Fig. 2 is generally formed with a substantially disk-like base 9 and the armature 3 held by this base 9. The base 9 is essentially formed with a substantially disk-like base body 11 with a base hole 10 formed in its central portion, a base cylinder body 12 vertically provided at the circumferential edge portion of the base hole 10 of the base body 11, and a base flange 13 extending from the circumferential edge portion of the base body 11 in the same direction as that of the base cylinder body 12.

The armature 3 is formed with a stator stack 3a held by the base cylinder body 12 and a coil 3b wound around the stator stack 3a, and it is disposed between the base cylinder body 12 and the base flange 13.

The rotor 4 of the motor 1B is essentially formed with a rotor shaft 14 having a predetermined diameter dimension, a substantially disk-like hub 15 fitted into and held by the rotor shaft 14 having a radial dimension greater than the diameter dimension E of the fitting portion 8 of Fig. 3 and a magnet 5 held by the hub 15. The hub 15 is essentially formed with a substantially disk-like hub body portion 16, the fitting portion 8 formed to be projected toward one surface side (on the upper side of Fig. 2) of the hub body portion 16, fitted into the disk fitting hole 7a of the magnetic disk 7 for holding the magnetic disk 7 and having a diameter dimension E and a hub flange 17 formed at the outer circumferential portion of the hub body 16.

The hub flange 17 is essentially formed with a hub flange extension portion 34 extending radially outward from the outer circumferential portion of the hub body portion 16 by a predetermined length and a substantially annular hub flange vertical wall portion 35 suspending from the peripheral edge portion of the hub flange extension portion 34. A gap having a predetermined width is formed between the armature 3 and the inner circumferential side of the hub flange vertical wall portion 35 to hold the magnet 5. In this case, the diameter dimension of the hub flange 17 is greater than that of the fitting portion 8 as described above. The magnet 5 to be held by the hub flange vertical wall portion 35 is adapted to be disposed radially outward to the fitting portion 8.

The fluid bearing 40 is essentially formed with a sleeve-like outer race 40a provided on the inner circumferential side of the base cylinder body 12 and held by the stator 2, an inner ring 40b formed by the rotor shaft 14, a thrust plate 42 held by the base body 11 for covering the base hole 10 of the base body 11 and simultaneously supporting the movement of the rotor shaft 14 in the thrust direction, and a seal member 43 interposed between the hub 15 and the outer race 40a to face the thrust plate 42.

Also, in the thus constructed second embodiment, in the same manner as in the first embodiment, the magnet 5 is disposed radially outward to the fitting portion 8, and, to that extent, the armature 3 disposed in opposite to the magnet 5 may become possible to dispose more radially outward. As a result, a larger space may be kept for the arrangement of the fluid bearing 40 to be disposed radially inward to the armature 3. And, a larger sized fluid bearing 40 may become possible to be used.

Thus, the fluid bearing 40 having a larger size may ensure a higher mechanical strength, and even if the motor 1 receives a mechanical shock from the outside and the shock is concentrated on the fluid bearing 40, it may become possible to prevent the fluid bearing 40 from being damaged. Due to this reason, the fear of the reduction in the rotational speed of the magnetic disk 7, the decrease of accuracy for reading and writing magnetic data and the generation of a noise or vibration all caused by the damage of the bearing can be avoided.

Also, by using such a larger sized fluid bearing 40, even if the motor is rotated at a high rotational speed, the friction is small, to that extent, the power consumption may be reduced. Furthermore, the generation of vibrations is lessened compared with therollingbearing, the accuracy of the writing and reading operation of the magnetic data is enhanced, the generation of noises is more surely suppressed, and hence it becomes possible to elongate the service life of the fluid bearing 40, that is, the life of the motor 1.

Also, since the dimensions in the radial direction of the armature 3 and the magnet 5 are not lessened in comparison with the conventional art, it becomes possible to obtain a desired rotational torque and speed in the same manner as in the conventional art.

Although the fluid bearing 40 using oil is exemplified in the first and second embodiments, a fluid bearing using air instead of the oil or using an oil impregnated bearing (self-lubricative bearing) is possible.

Also, although in the foregoing respective embodiments, a case where the magnet and the armature are arranged to face each other in the radial direction is exemplified, it is possible, instead, to apply the present invention to a motor in which the magnet and the armature are held in the confronting surface portion of the rotor and the stator, respectively, and the magnet and the armature are arranged to face each other in the axial direction.

According to the first to the third aspects of the present invention, the magnet is disposed radially outward to the fitting portion, and, to that extent, the armature to be arranged to face the magnet may be disposed more radially outward. Therefore, a larger space may be kept for the arrangement of the fluid bearing to be disposed radially inward to the armature, so that it becomes possible to use the fluid bearing having a larger size. As a result, by using the large sized fluid bearing, the fluid bearing may ensure a higher mechanical strength, and even if the motor receives a mechanical shock from the outside and the shock is concentrated on the fluid bearing, it becomes possible to prevent the fluid bearing from being damaged. For this reason, the fear of the reduction in the rotational speed of the magnetic disk, the decrease of the accuracy of reading and writing magnetic data and the generation of a noise or vibration all caused by the damage of the bearing can be avoided.

In addition, enhancement of shock-proof characteristic can be attained without reducing the dimension of the radial direction of the magnet and the armature. Thus, the desired rotational torque and speed necessary for this motor can be ensured.

Also, the fluid bearing is used so that even if the motor is rotated at a high rotational speed, there is a small friction, which may reduce the power consumption. Furthermore, the generation of vibration has lessened compared with the rolling bearing, the accuracy of the writing and reading operation of the magnetic data is enhanced, the generation of noises is suppressed, and hence it is possible to elongate the service life of the fluid bearing, that is, the life of the motor.

## Claims

1. A motor in which a magnet is provided to a rotor so as to face an armature provided on a stator, a bearing for supporting rotation of the rotor relative to the stator is provided radially inward of the arrangement of the magnet and the armature, and a fitting portion inserted into a hole of a magnetic disk for supporting the magnetic disk is provided to the rotor, wherein the bearing is a fluid bearing and the magnet is disposed radially outward of the fitting portion.

2. The motor according to claim 1, wherein an outer race of the bearing is formed in connection with the rotor.

3. The motor according to claim 1, wherein an inner race of the bearing is formed in connection with the rotor.
